# EUROPÄISCHE PATENTANMELDUNG

(11) **EP 1 179 361 A1**
(43) Veröffentlichungstag der Anmeldung: **13.02.2002**
(21) Anmeldenummer: 01117334.1
(22) Anmeldetag: 18.07.2001
(51) Int. Cl.: B01D 71/02, B01D 53/22, C01B 3/50, B01D 69/10, B01D 67/00, H01M 4/94

(54) **Verfahren zur Herstellung einer Metallverbundmembran, damit hergestellte Metallverbundmembran und deren Verwendung**

(30) Priorität: 12.08.2000 DE 10039595
(71) Anmelder: OMG AG & Co. KG, 63457 Hanau (DE)
(72) Erfinder: Kempf, Bernd, Dr., 63839 Kleinwallstadt (DE); Kuhn, Werner, 63517 Rodenbach (DE); Drost, Ernst, Dr., 63755 Alzenau (DE); Beyer, Hans Hermann, Dr., 63796 Kahl (DE); Roos, Meike, Dr., 63599 Biebergemünd (DE); Wieland, Stefan, Dr., 63069 Offenbach (DE)
(74) Vertreter: Herrmann, Reinhard

(57) **Zusammenfassung**

Die Erfindung betrifft ein Verfahren zur Herstellung einer Metallverbundmembran, welche eine dünne Metallmembran mit einer gewünschten Dicke und einen metallischen Membranträger mit poröser Struktur enthält, wobei Metallmembran und Membranträger aus zwei unterschiedlichen Metallen oder Metallegierungen bestehen. Das Verfahren ist dadurch gekennzeichnet, daß eine Vorstufe der Metallmembran auf eine unporöse Vorstufe des Membranträgers gelegt, der Metallverbund zwischen beiden Vorstufen hergestellt, die gewünschte Dicke der Metallmembran durch Umformen des Metallverbundes eingestellt und abschließend die poröse Struktur des Membranträgers erzeugt wird.

## Beschreibung

Die Erfindung betrifft ein Verfahren zur Herstellung einer Metallverbundmembran auf einem porösen Membranträger. Metallverbundmembranen dieser Art werden für die Trennung von Gasgemischen eingesetzt, insbesondere für die Abtrennung von Wasserstoff aus einem Reformatgas zur Versorgung von Brennstoffzellen mit dem nötigen Brenngas.

Für diesen Zweck werden gewöhnlich Palladium- oder Palladiumlegierungsmembranen auf porösen oder nicht porösen Trägern ebenso eingesetzt wie kompakte Palladium- oder Palladiumlegierungsmembranen. Als nicht poröse Träger werden unter anderem Folien aus Wasserstoff durchlässigen Metallen verwendet. Die Permeationsfähigkeit der Membranen für Wasserstoff steigt mit der Temperatur an. Die typischen Betriebstemperaturen liegen deshalb zwischen 300 und 600 °C.

T. S. Moss und R. C. Dye [Proc.-Natl. Hydrogen Assoc. Annu. U.S. Hydrogen Meet., 8th (1997), 357-365] und T. S. Moss, N. M. Peachey, R. C. Snow und R. C. Dye [Int. J. Hydrogen Energy 23(2), (1998), 99-106 ISSN: 0360-3199] beschreiben die Herstellung und Verwendung einer Membran, die durch beidseitiges Aufbringen von Pd oder PdAg durch Kathodenzerstäubung auf eine Folie aus einem Metall der 5. Nebengruppe erhalten wird. Die Dicken der beidseitig aufgebrachten Schichten können variiert werden, so daß ein asymmetrisches Bauteil entsteht (zum Beispiel: 0,1µm Pd / 40µm V / 0,5 µm Pd). Permeationsversuche belegen eine zwanzigmal höhere Wasserstoffpermeation im Vergleich zu selbsttragenden Pd-Membranen. Entsprechend eignet sich die beschriebene Membran für den Einsatz in einem PEM-Brennstoffzellen-System anstelle der herkömmlichen katalytischen Gasreinigungsstufen (Wassergasshift-Reaktion und präferentielle Oxidation von CO).

Die GB 1 292 025 beschreibt die Verwendung von Eisen, Vanadium, Tantal, Nickel, Niob oder Legierungen davon als nicht poröse Träger für eine unzusammenhängende, beziehungsweise poröse, Palladium(-legierungs)-schicht. Die Palladiumschicht wird durch Druck-, Sprüh- oder galvanische Verfahren in einer Dicke von etwa 0,6 mm auf den Träger mit einer Dicke von 12,7 mm aufgebracht. Anschließend wird die Dicke des so erzeugten Verbundes durch Rollen auf 0,04 bis 0,01 mm vermindert.

Gemäß DE 197 38 513 Cl lassen sich durch abwechselnde, galvanische Abscheidung von Palladium und einem Legierungsmetall aus der 8. oder 1. Nebengruppe des Periodensystems der Elemente auf einem nicht näher spezifizierten metallischen Träger besonders dünne Wasserstofftrennmembranen (Schichtdicken kleiner 20 µm) herstellen. Zur Überführung der alternierenden Schichten in eine homogene Legierung kann an die galvanische Abscheidung eine geeignete Temperaturbehandlung angeschlossen werden.

Als poröse Träger für Palladium(-legierungs)-Membranen kommen sowohl metallische als auch keramische Materialien in Frage. Dabei kann gemäß der JP 05078810 (WPIDS 1993-140642) Palladium beispielsweise durch Plasmasprühverfahren auf einen porösen Träger aufgebracht werden.

Nach Y. Lin, G. Lee und M. Rei [Catal. Today 44 (1998) 343-349 und Int. J. of Hydrogen Energy 25 (2000) 211-219] kann eine defektfreie Palladiummembran (Schichtdicke 20-25µm) auf einem rohrförmigen Träger aus porösem Edelstahl 316L in einem stromlosen Beschichtungsverfahren hergestellt und als Bauteil in einem Dampfreformierungsreaktor integriert werden. Bei Arbeitstemperaturen von 300 bis 400 °C wird ein gereinigtes Reformat mit 95 Vol.-% H₂ erhalten. Der optimale Arbeitstemperaturbereich ist allerdings streng begrenzt, da unterhalb von 300 °C eine durch den Wasserstoff bedingte Versprödung der Palladiummembran einsetzt, während oberhalb von 400 bis 450 °C Legierungsbestandteile des Edelstahlträgers in die Palladiumschicht diffundieren und zu einer Verschlechterung der Permeationseigenschaften führen.

Bevorzugt werden stromlose Beschichtungsverfahren für die Beschichtung keramischer Träger verwendet. So wird von E. Kikuchi [Catal. Today 56 (2000) 97-101] die CVD-Beschichtung einer asymmetrischen, porösen Keramik mit Palladium beschrieben, die in einem Methan-Dampfreformierungsreaktor zur Abtrennung des Wasserstoffs aus dem Reformat eingesetzt wird. Die minimale Schichtdicke beträgt 4,5 µm. Bei dünneren Schichten kann die Gasdichtheit der Schicht nicht mehr gewährleistet werden. Neben der CVD-Beschichtung mit reinem Pd ist auch die Beschichtung mit Palladiumlegierungen möglich, wobei die Legierung mit Silber eine Versprödung der Palladiummembran verhindert und die Wasserstoffpermeabilität erhöht.

Neben reinen Wasserstofftrennmembranen werden für die Anwendungen in Brennstoffzellensystemen auch immer wieder Membranen beschrieben, die zusätzlich zur Wasserstofftrennschicht (Palladium) mit einer reaktiven Schicht versehen sind. So kann der poröse Träger einer Palladium(-legierungs)-membran beispielsweise auf der Seite, die nicht mit Pd beschichtet ist, mit einem Verbrennungskatalysator überzogen werden. Die bei der Verbrennung an der reaktiven Seite freigesetzte Wärme dient dann gleichzeitig dem Erhalt der Betriebstemperatur der Wasserstofftrennmembran (EP 0924162 A1). Ein solches Bauteil kann dann hinter einem Reformer in den Reformierprozess integriert oder direkt in den Reformer eingebaut werden (EP 0924161 A1, EP 0924163 A1).

Darüber hinaus sind nicht nur Palladiummembranen zur Wasserstoffabtennung im Brennstoffzellenbereich einsetzbar. Die EP 0945174 A1 stellt ein Konzept zur Verwendung universell aufgebauter Schichtmembranen vor, die sowohl feinporöse, abtrennselektive Kunststoffe und/oder mehrere Keramikschichten und/oder Schichten aus einem abtrennselektiven Metall (vorzugsweise aus der 4., 5. oder 8. Nebengruppe) enthalten können, wobei diese Schichten auf einen porösen Träger (Glas, Keramik, Metallschaum, Kohle oder poröser Kunststoff) aufgebracht sind.

Ziel der Entwicklung von Metallmembranen für die Abtrennung von Wasserstoff aus Gasgemischen ist es, hohe Permeationsraten für Wasserstoff zu erhalten. Hierzu muss die Metallmembran so dünn wie möglich ausgebildet werden, ohne daß dabei Undichtigkeiten in Form von Löchern auftreten. Solche Membranen sind nur noch in geträgerter Form zu verarbeiten. Damit der Membranträger die Permeation von Wasserstoff so gering wie möglich beeinflusst, muss er eine hohe Porosität aufweisen. Daher besteht bei den bekannten Herstellverfahren für geträgerte Membranen die Schwierigkeit, eine defektfreie Membran auf einem porösen Träger abzuscheiden. Hierbei treten zwei Probleme auf. Zum einen können die beschriebenen Verfahren zur Abscheidung von zum Beispiel Palladium oder einer Palladiumlegierung erst ab einer bestimmten Schichtdicke eine relativ defektfreie Membranschicht garantieren. Diese minimale Schichtdicke liegt bei etwa 4 bis 5 µm. Zum anderen bedingen die verwendeten Beschichtungstechniken zur Auftragung der Membranschicht auf die porösen Membranträger, daß die mittleren Porendurchmesser des Membranträgers einen bestimmten Wert nicht überschreiten dürfen, da es sonst unmöglich wäre, zusammenhängende und defektfreie Beschichtungen aufzubringen. Die Porengröße der bekannten Membranträgermaterialien, wie poröse Keramiken oder poröse Metallträger, liegen daher unterhalb von 0,1 µm. Dies hat zur Folge, daß der Strömungswiderstand des Gases durch die Poren nicht in einem wünschenswerte Maße verringert werden kann.

Die WO 89/04556 beschreibt ein elektrochemisches Verfahren zur Herstellung einer porenfreien, von einem porösen Metallkörper gestützten Membran auf der Basis von Palladium. Gemäß dem Verfahren wird eine porenfreie Palladium(-silber)-membran auf einem porösen, metallischen Träger dadurch erzeugt, daß eine Metallegierungsfolie (vorzugsweise Messing) einseitig galvanisch mit Palladium oder Palladium/Silber beschichtet wird (Dicke der Palladiumschicht: ca. 1µm). Die Porosität des Trägers wird nachträglich durch Herauslösen der unedlen Komponente aus der Messingfolie erzeugt. Das Herauslösen erfolgt elektrochemisch, wobei in einem zyklischen Verfahren zunächst beide Trägerkomponenten in Lösung gebracht werden, sich jedoch die edlere Komponente direkt wieder auf der Palladiumschicht abscheidet (elektrochemische Umkristallisation). Die weniger edle Komponente der folienförmigen Legierung geht dabei praktisch quantitativ in Lösung, so daß ein poröser Metallkörper, vorzugsweise ein poröser Kupferkörper, als Träger für die Palladium/Silber-Membran zurückbleibt.

Das Verfahren gemäß der WO 89/04556 hat den Nachteil, daß die als Träger dienende Messingfolie praktisch komplett aufgelöst und durch elektrochemische Umkristallisation wieder neu aufgebaut werden muss. Dadurch wird der Verbund zwischen der Palladiumschicht und der Trägerfolie zerstört. Die mechanische Festigkeit der umkristallisierten Folie ist gering und ihre Porosität undefiniert.

Aufgabe der vorliegenden Erfindung ist es, ein einfaches und kostengünstiges Verfahren für die Herstellung einer Metallverbundmembran für die Wasserstoffabtrennung aus Gasgemischen anzugeben. Ein weiterer Gegenstand der Erfindung sind Metallverbundmembranen, deren Membranträger eine bisher nicht realisierbare, hohe Porosität (mittlere Porengröße und Porenvolumen) aufweisen. Weiterhin sind Metallverbundmembranen Gegenstand der vorliegenden Erfindung, bei denen die mittlere Porengröße der Membranträger größer ist als die Dicke der Metallmembran.

Diese und weitere Gegenstände der Erfindung werden durch ein Verfahren zur Herstellung einer Metallverbundmembran gelöst, welche eine dünne Metallmembran mit einer gewünschten Dicke und einen metallischen Membranträger mit poröser Struktur enthält, wobei Metallmembran und Membranträger aus zwei unterschiedlichen Metallen oder Metallegierungen bestehen. Das Verfahren ist dadurch gekennzeichnet, daß eine Vorstufe der Metallmembran auf eine unporöse Vorstufe des Membranträgers gelegt, der Metallverbund zwischen beiden Vorstufen hergestellt, die gewünschte Dicke der Metallmembran durch Umformen des Metallverbundes eingestellt und abschließend die poröse Struktur des Membranträgers erzeugt wird.

Gemäß der vorliegenden Erfindung wird also zur Herstellung der Metallverbundmembran von massiven, porenfreien Metallfolien ausgegangen. Für die eigentliche Gastrennmembran wird dabei eine Metallfolie mit einer Dicke zwischen 50 und 100 µm verwendet. Eine Folie dieser Dicke lässt sich in hervorragender Qualität auf metalltechnischem Wege praktisch porenfrei herstellen. Diese Folie wird auf eine dickere Metallfolie (oder Blech) gelegt, die den späteren Membranträger bildet. Danach wird der Metallverbund zwischen den beiden Metallfolien hergestellt. Dies geschieht bevorzugt mittels Walzplattieren, Sprengplattieren oder Diffusionsschweißen. Das Ergebnis ist ein zweilagiges Laminat. Vor dem Verbinden der Metallfolien ist es empfehlenswert, ihre Kontaktflächen in bekannter Weise sorgfältig zu reinigen und aufzurauhen.

Bei der Herstellung des Metallverbundes durch diese Verfahren erfolgt schon eine gewisse Dickenreduzierung. Hieran schließen sich weitere Umformvorgänge mittels Walzen, Drücken, Fließpressen, Tiefziehen oder Kombinationen dieser Umformtechniken an, bis die gewünschte Dicke der Metallmembran erreicht ist. Die hierfür notwendigen Maßnahmen wie zum Beispiel Wärmebehandlungen zwischen den einzelnen Umformungen sind dem Metallfachmann bekannt. Die Form der fertigen Metallverbundmembran ist dabei nicht auf ebene Membranen beschränkt. Die Metallverbundmembran kann vielmehr zu verschiedenartigen, geometrischen Strukturen umgeformt werden, die zusätzlich den Vorteil haben, daß ihre mechanische Stabilität wesentlich besser ist als die einer ebenen Membran gleicher Wandstärke. Die hierfür einsetzbaren Techniken sind zum Beispiel das Walzen, Drücken, Fließpressen oder Tiefziehen. Besonders zu nennen ist hier die Umformung der Metallverbundmembran zu dünnen Röhrchen mittels Ziehverfahren.

Das Dickenverhältnis zwischen Metallmembran und Membranträger in der fertigen Metallverbundmembran liegt bevorzugt zwischen 1:5 und 1:20 und entspricht dem Dikkenverhältnis der Ausgangsfolien vor der metalltechnischen Bearbeitung.

Die beschriebene, metalltechnische Herstellung der Metallmembran hat gegenüber den bekannten Beschichtungsverfahren den entscheidenden Vorteil, daß von einer porenfreien Metallfolie hoher Qualität ausgegangen werden kann, deren Porenfreiheit auch nach den Umformungsvorgängen noch gewährleistet ist.

Erst nach Abschluss der Umformvorgänge wird die poröse Struktur der Trägerfolie erzeugt. Bei der porösen Struktur kann es sich sowohl um eine regelmäßige Lochstruktur handeln, die zum Beispiel durch chemische, elektrochemische oder physikalische Ätzprozesse hergestellt werden kann, als auch um eine offenporige Struktur mit einer statistischen Verteilung der Porengrößen und Porenanordnungen. Bevorzugt wird die letztere Struktur verwendet. Sie kann dadurch erzeugt werden, daß die Vorstufe des Membranträgers eine zwei- oder mehrphasige Metallegierung enthält und nach Herstellen und Umformen des Metallverbundes eine oder mehrere Legierungsphasen elektrochemisch aus dem Membranträger herausgelöst werden.

Bevorzugt enthält der Membranträger eine eutektische Legierung, wobei die poröse Struktur durch elektrochemisches Herauslösen der unedleren (elektronegativeren) Phase gebildet wird. Besonders geeignet ist zum Beispiel die eutektische Legierung AgCu, die eine Ag-reiche und eine Cu-reiche Phase enthält. Die Cu-reiche Phase lässt sich auf elektrochemischem Wege sehr leicht herauslösen. Die Ag-reiche Phase bleibt dabei nahezu unberührt. Während gemäß der WO 89/04556 der Membranträger vollständig aufgelöst und umgebaut wird, bleibt gemäß dem vorliegenden Verfahren ein starres Gerüst aus der Ag-reichen Legierungsphase erhalten - mit entsprechend positiven Auswirkungen auf die Stabilität des Membranträgers.

Ein weiterer Vorteil des erfindungsgemäßen Verfahrens'besteht darin, daß die Domänenstruktur des zwei- oder mehrphasigen, metallischen Membranträgers durch Wahl der Legierungszusammensetzung und durch Wärmebehandlungen in gewissen Grenzen verändert oder eingestellt werden kann, so daß eine bewußte Steuerung der Porosität des Membranträgers möglich wird. Die Porendurchmesser können durch das vorliegende Verfahren in einem weitaus größeren Maße als nach den hergebrachten Verfahren variiert werden. So ist es insbesondere auch möglich, die mittleren Porendurchmesser des Membranträgers größer als die Dicke der Metallmembran auszubilden. Bevorzugt werden mittlere Porendurchmesser des Membranträgers größer als 0,5 und kleiner als 10 µm angestrebt.

Bevorzugt beträgt der Kupfergehalt der eutektischen Legierung zwischen 20 und 80 Gew.-%, bezogen auf das Gesamtgewicht der Legierung.-Vor dem Herauslösen der Cu-reichen Legierungsphase aus dem Membranträger wird die Metallverbundmembran einer Wärmebehandlung bei 400 bis 750 °C unterworfen. Hierdurch werden einerseits durch die Umformprozesse hervorgerufene Gefügeänderungen wieder rückgängig gemacht und andererseits kann hierdurch die Gefügestruktur des Membranträgers und damit seine spätere Porosität in gewünschter Weise beeinflußt werden.

Das vorgestellte Verfahren eignet sich für die Herstellung von geträgerte Metallmembranen aus unterschiedlichen Werkstoffen. Bevorzugt enthalten die Metallmembranen jedoch Palladium oder Palladiumlegierungen, die besonders vorteilhafte Eigenschaften als Gastrennmembranen aufweisen. Geeignete Palladiumlegierungen sind zum Beispiel PdAg23, PdCu40 oder eine PdY-Legierung.

Ein weiteres Charakteristikum des Verfahrens ist die Tatsache, daß die Struktur der Begrenzungsfläche der Metallmembran durch die Oberflächenstruktur der für die Herstellung verwendeten Metallfolien gegeben ist und daher relativ glatt sein kann. Die nachträgliche Erzeugung der Porosität im Membranträger beeinflusst die Oberflächenstruktur der Metallmembran nur noch unwesentlich. Die fertige Metallmembran hat daher eine sehr gleichmäßige Dicke und ist im wesentlichen glatt.

Bei der Herstellung der Gastrennmembran wird eine möglichst geringe Membrandicke angestrebt, um der Membran eine hohe Wasserstoffpermeabilität zu verleihen. Gastrennmembranen aus Palladium oder Palladiumlegierungen mit einer Dicke von mehr als 20 µm sind für die Abtrennung von Wasserstoff aus Gasgemischen wegen der hohen Edelmetallkosten und der geringen Permeationsleistung nur noch von geringem Interesse. Membranen mit einer Dicke von weniger als 1 µm sind dagegen mit dem vorgeschlagenen Verfahren nur noch schwer zugänglich und können vermehrt Defekte aufweisen. Außerdem steigt bei diesen geringen Dicken auch die Permeabilität für unerwünschte Gase. Auf Grund beider Effekte sinkt die Trennleistung der Membran bei Membrandicken unterhalb von 1 µm auf nicht mehr tolerierbare Werte. Vorzugsweise werden daher mit Hilfe des Verfahrens Gastrennmembranen mit einer Dicke zwischen 5 und 1 µm hergestellt.

Der poröse, metallische Membranträger dient zur Stützung der dünnen Metallmembran, wobei der Membranträger die Permeationsfähigkeit der Verbundmembran möglichst wenig gegenüber einer gleichdicken, freitragenden Metallmembran verschlechtern sollte. Andererseits ist eine gewisse Mindestdicke des Membranträgers erforderlich, um die notwendige mechanische Stabilität der Verbundmembran zu gewährleisten. Die Dicke des Membranträgers sollte daher weniger als 100 µm betragen und 20 µm nicht unterschreiten. Bevorzugt werden Dicken des Membranträgers zwischen 50 und 20 µm angestrebt.

Das bisher beschriebene Verfahren erzeugt die Metallverbundmembran durch metalltechnische Umformung einer zweilagigen Anordnung aus einer Vorstufe der Metallmembran und einer Vorstufe des Membranträgers. Für bestimmte Materialkombinationen vom Metallmembran und Membranträger kann es zweckmäßig sein, zusätzlich eine temporäre Deckmembran für die Metallmembran vorzusehen, um die Verarbeitbarkeit bei den metalltechnischen Umformprozessen zu verbessern. Als Material für die Deckmembran wird dabei ein Unedelmetall- oder eine Metallegierung gewählt, die sich leicht auf chemischem Wege entfernen lässt, ohne daß dabei die Metallmembran oder der Membranträger angegriffen wird. Die Deckmembran kann dabei vor, gleichzeitig oder nach Bildung der Porosität im Membranträger entfernt werden.

Für diese Verfahrensvariante gelten natürlich die schon gemachten Ausführungen zur Materialauswahl für Metallmembran und Membranträger sowie für deren Dicken im fertigen Metallverbund und für die Porosität des Membranträgers.

In einer weiteren Verfahrensvariante wird statt der temporären Deckmembran ein zweiter Membranträger verwendet. Die Metallmembran wird in diesem Fall zwischen beiden Membranträgern angeordnet. Nach Abschluss der Umformprozesse wird in beiden Membranträgern die erforderliche Porosität erzeugt. Vorteilhafterweise besteht deshalb der zweite Membranträger aus demselben Material wie der erste Membranträger.

Die Verfahrensprodukte dieser Verfahrensvariante sind also symmetrische, dreilagige Metallverbundmembranen, wobei die eigentliche Gastrennmembran auf beiden Seiten von den porösen, metallischen Membranträgern bedeckt ist. Auch diese Verfahrensvariante weist bei bestimmten Materialkombinationen eine bessere Verarbeitbarkeit bei den metalltechnischen Umformprozessen auf als es bei der Herstellung der zweilagigen Metallverbundmembran der Fall ist. Auch für diese Verfahrensvariante gelten die schon gemachten Ausführungen zur Materialauswahl für Metallmembran und Membranträger sowie für deren Dicken im fertigen Metallverbund und für die Porosität der Membranträger.

Die mit dem erfindungsgemäßen Verfahren hergestellten Metallverbundmembranen werden bevorzugt für die Abtrennung von Wasserstoff aus Gasgemischen, insbesondere aus Reformatgasen, eingesetzt. Die verschiedenen Verfahrensvarianten erlauben die Herstellung von Metallverbundmembranen, die Membranträger mit bisher nicht realisierbarer, hoher Porosität (mittlere Porengröße und Porenvolumen) aufweisen. Bei Dikken der Gastrennmembran von 1 bis 20, bevorzugt von 1 bis 5 µm, weisen der oder die Membranträger eine mittlere Porengröße größer als 0,5 und kleiner als 10 µm auf. Erstmalig ist es also mit dem beschriebenen Verfahren möglich, Metallverbundmembranen zu erzeugen, bei denen die mittlere Porengröße des oder der Membranträger größer ist als die Dicke der Gastrennmembran. Diese Metallverbundmembranen weisen daher hervorragende Wasserstoffpermeationsleistungen auf.

Die Erfindung wird an Hand der folgenden Beispiele näher erläutert.

### Beispiel 1:

Ein Band aus PdAg23 (Abmessungen: 30 x 0,07 x 500 mm) wurde zwischen zwei Bänder aus AgCu28 (Abmessungen: 30 x 1,0 x 500 mm) gelegt. Zuvor wurden die Kontaktflächen sorgfältig gereinigt und mechanisch aufgerauht. Die drei Bänder wurden an einer Stirnseite miteinander verschweißt und danach durch Heiß-Walzplattieren metalltechnisch miteinander verbunden. Hierzu wurden die Bänder in einem Rohrofen bei 600 °C für die Dauer von 20 min unter Schutzgas (Argon) geglüht und anschließend auf vorgewärmten Walzballen (200 °C) bei einem Umformgrad von 45% zu einem Band ausgewalzt.

Die weitere Umformung zu einer Metallverbundmembran mit einer Gesamtdicke von 0,1 mm erfolgte durch konventionelles Bandwalzen im kalten Zustand mit Umformgraden von ca. 15% und Zwischenglühungen bei 600 °C für 15 min in einem Rohrofen unter Schutzgas nach einem Gesamtumformgrad von etwa 70%.

Nach Abschluss der Walzvorgänge wurde die Metallverbundfolie einer Wärmebehandlung unter Schutzgas (Argon) bei 600 °C für die Dauer von 30min unterzogen und durch kathodische Entfettung gereinigt. Die Cu-reiche Phase der AgCu28-Legierung wurde dann anodisch in einem schwefelsauren Elektrolyten mit 10%-iger Schwefelsäure im potentiostatischen Betrieb bei 40 °C und konstant 220 mV Badspannung in 16 Stunden herausgelöst. Hierdurch bildete sich in den Membranträgerfolien eine offenporige Struktur heraus.

Metallographische Untersuchungen und Aufnahmen mit einem Rasterelektronenmikroskop über den Querschnitt der fertiggestellten Metallverbundmembran zeigten eine fest haftende, dichte PdAg-Membran mit einer Membrandicke von 3 bis 5 µm und beidseitig die porösen AgCu-Trägerschichten mit durchgehender Porosität und einer Porengröße von 1 bis 2 µm.

### Beispiel 2:

In diesem Beispiel wurde eine einseitig geträgerte Gastrennmembran hergestellt. Der Vorteil dieser einseitigen Anordnung ist die größere, freie Zutrittsfläche auf der Gaszuführungseite und der damit verbundene, geringere Diffusionswiderstand der Verbundmembran.

Ein Band aus PdAg23 (Abmessungen 30 x 0,07 x 500 mm) wurde auf ein Band aus AgCu28 (Abmessungen 30 x 1,0 x 500 mm) gelegt. Beide Bänder wurden an der Stirnseite miteinander verschweißt. Die Kontaktflächen der Bänder waren zuvor wie in Beispiel 1 beschrieben gereinigt und aufgerauht worden.

Der Metallverbund wurde wie in Beispiel 1 durch Heiß-Walzplattieren erzeugt. Die Weiterverarbeitung erfolgte ebenfalls wie in Beispiel 1.

### Beispiel 3:

In diesem Beispiel wurde ebenfalls eine einseitig geträgerte Gastrennmembran hergestellt. Zur Erleichterung der Plattiervorgänge wurde das Band aus PdAg23 (Abmessungen: 30 x 0,07 x 500 mm) zwischen zwei Bänder gelegt, von denen das eine aus einer AgCu28-Legierung bestand und den späteren Träger bildete, während das zweite Band aus Kupfer bestand. Das Kupferband diente nur als temporäre Stützfolie und wurde während der elektrolytischen Behandlung zur Ausbildung der Poren in der Membranträgerfolie vollständig entfernt.

### Beispiel 4:

In diesem Beispiel wurde eine röhrenförmige Metallverbundmembran erzeugt.

Eine Ronde aus PdAg23 (Durchmesser 60 mm; Dicke 1 mm) wurde zwischen eine untergelegte Ronde aus AgCu28 (Durchmesser 60 mm; Dicke 12 mm) und eine aufgelegte Ronde aus Kupfer (Durchmesser 60 mm, Dicke 8 mm) gelegt. Zuvor waren die Kontaktflächen sorgfältig gereinigt und mechanisch aufgerauht worden.

Die Ronden wurden in eine hydraulische Presse eingesetzt und zur Herstellung des Metallverbundes mit einer Presskraft von 2000 kg/cm² zusammengepreßt. Hierbei ergab sich eine Dickenverminderung von etwa 10%. Aus der so erzeugten Verbundplatte wurden zylindrische Tabletten mit einem Durchmesser von 12 mm herausgeschnitten und mit einer hydraulischen Presse im Rückwärtsfließpreßverfahren zu Rohr-Rohlingen verpreßt, deren Wände von innen nach außen aus einer Lage Kupfer, einer Lage PdAg23 und einer Lage AgCu28 bestanden. Die Rohr-Rohlinge wurden nach einer Wärmebehandlung bei 600 °C für 20 min unter Schutzgas mit Raschabkühlung durch konventionelles Rohrziehen in mehreren Schritten zu Rohren mit einem Aussendurchmesser von 2 mm und einer Gesamtwanddicke von 0,2 mm ausgezogen. Zwischen den einzelnen Ziehschritten wurden geeignete Zwischenglühungen für eine die weitere Umformung ausreichende Entfestigung vorgenommen.

Durch elektrochemische Behandlung wurde die auf der Innenseite der Rohrwände befindliche Lage aus Kupfer vollständig entfernt und aus der aussenseitigen AgCu-Legierung die Cu-reiche Legierungsphase herausgelöst, so daß dünnwandige PdAg23-Röhrchen mit einem außenseitigen, porösen Stützkörper aus Silber erhalten wurden.

### Beispiel 5:

Beispiel 4 wurde wiederholt, jedoch wurde dieses Mal auf die nur zur temporären Stützzwecken dienende Ronde aus Kupfer verzichtet, so daß auf der Innenseite der Rohre vor der abschließenden elektrochemischen Behandlung direkt die PdAg-Oberfläche vorlag. Hierdurch war das insbesondere bei kleinen Rohrdurchmessern schwierige Herauslösen der Innenbeschichtung nicht erforderlich.

## Patentansprüche

1. Verfahren zur Herstellung einer Metallverbundmembran enthaltend eine dünne Metallmembran mit einer gewünschten Dicke und einen metallischen Membranträger mit poröser Struktur, wobei Metallmembran und Membranträger aus zwei unterschiedlichen Metallen oder Metallegierungen bestehen,
**dadurch gekennzeichnet,**
**daß** eine Vorstufe der Metallmembran auf eine unporöse Vorstufe des Membranträgers gelegt, der Metallverbund zwischen beiden Vorstufen hergestellt, die gewünschte Dicke der Metallmembran durch Umformen des Metallverbundes eingestellt und abschließend die poröse Struktur des Membranträgers erzeugt wird.

2. Verfahren nach Anspruch 1,
**dadurch gekennzeichnet,**
**daß** der Metallverbund mittels Walzplattieren, Sprengplattieren oder Diffusionsschweißen vorgenommen wird.

3. Verfahren nach Anspruch 2,
**dadurch gekennzeichnet,**
**daß** die Umformung des Metallverbundes mittels Walzen, Drücken, Fließpressen, Tiefziehen oder Kombinationen dieser Umformungstechniken erfolgt.

4. Verfahren nach Anspruch 3,
**dadurch gekennzeichnet,**
**daß** die Metallverbundmembran mittels Ziehverfahren zu Röhrchen umgeformt wird.

5. Verfahren nach Anspruch 1,
**dadurch gekennzeichnet,**
**daß** die Metallmembran Palladium oder eine Palladiumlegierung und die Vorstufe des Membranträgers eine zwei- oder mehrphasige Metallegierung enthalten und die poröse Struktur des Membranträgers nach Herstellen und Umformen des Metallverbundes durch elektrochemisches Herauslösen einer oder mehrerer Legierungsphasen des Membranträgers erzeugt wird.

6. Verfahren nach Anspruch 5,
**dadurch gekennzeichnet,**
**daß** die Vorstufe des Membranträgers eine eutektische Legierung enthält und die poröse Struktur durch elektrochemisches Herauslösen der unedleren (elektronegativeren) Phase gebildet wird.

7. Verfahren nach Anspruch 6,
**dadurch gekennzeichnet,**
**daß** die Vorstufen des Membranträgers die eutektische Legierung AgCu enthält und die poröse Struktur durch elektrochemisches Herauslösen der Cu-reichen Phase gebildet wird.

8. Verfahren nach Anspruch 7,
**dadurch gekennzeichnet,**
**daß** der Kupfergehalt der eutektischen Legierung zwischen 20 und 80 Gew.-%, bezogen auf das Gesamtgewicht der Legierung, liegt.

9. Verfahren nach Anspruch 8,
**dadurch gekennzeichnet,**
**daß** das Herauslösen der Cu-reichen Legierungsphase nach einer Wärmebehandlung bei 400 bis 750 °C erfolgt.

10. Verfahren nach Anspruch 9,
**dadurch gekennzeichnet,**
**daß** die Metallmembran eine PdAg23, PdCu40 oder eine PdY-Legierung enthält.

11. Verfahren nach einem der vorhergehenden Ansprüche,
**dadurch gekennzeichnet,**
**daß** der poröse, metallische Membranträger eine Dicke von weniger als 100 und mehr als 20, vorzugsweise zwischen 50 und 20 µm, aufweist.

12. Verfahren nach Anspruch 11,
**dadurch gekennzeichnet,**
**daß** die Metallmembran eine Dicke von weniger als 20 µm und mehr als 1 µm, vorzugsweise zwischen 5 und 1 um aufweist.

13. Verfahren nach Anspruch 1,
**dadurch gekennzeichnet,**
**daß** zusätzlich zu den Vorstufen der Metallmembran und des Membranträgers eine Vorstufe einer temporären Deckmembran aus einem Unedelmetall- oder einer Metallegierung vorgesehen wird und die Vorstufe der Metallmembran zwischen die Vorstufe des Membranträgers und die Vorstufe der Deckmembran gelegt, der Metallverbund zwischen den drei Vorstufen hergestellt, die gewünschte Dicke der Metallmembran durch Umformen des Metallverbundes eingestellt und abschließend die poröse Struktur des Membranträgers erzeugt wird, wobei die temporäre Deckmembran vor, gleichzeitig oder nach Bildung der porösen Struktur im Membranträger komplett abgelöst wird.

14. Verfahren nach Anspruch 1,
**dadurch gekennzeichnet,**
**daß** zusätzlich zu den Vorstufen der Metallmembran und des Membranträgers eine weitere, unporöse Vorstufe eines zweiten Membranträgers vorgesehen wird und die Vorstufe der Metallmembran zwischen die Vorstufe des Membranträgers und die Vorstufe des zweiten Membranträgers gelegt, der Metallverbund zwischen den drei Vorstufen hergestellt, die gewünschte Dicke der Metallmembran durch Umformen des Metallverbundes eingestellt und abschließend die poröse Struktur der Membranträger erzeugt wird.

15. Metallverbundmembran enthaltend eine Metallmembran auf einem metallischen Membranträgern mit poröser Struktur,
**dadurch gekennzeichnet,**
**daß** die Metallmembran eine Dicke von 1 bis 20 µm aufweist und die mittlere Porengröße des oder der Membranträger größer als 0,5 und kleiner als 10 µm ist.

16. Metallverbundmembran nach Anspruch 15,
**dadurch gekennzeichnet,**
**daß** die mittlere Porengröße des Membranträgers größer ist als die Dicke der Metallmembran.

17. Metallverbundmembran nach Anspruch 15 oder 16,
**dadurch gekennzeichnet,**
**daß** die Metallmembran Palladium oder eine Palladiumlegierung und der poröse Membranträger eine zwei- oder mehrphasige Metallegierung enthalten.

18. Metallverbundmembran nach Anspruch 17,
**dadurch gekennzeichnet,**
**daß** der Membranträger eine eutektische Legierung enthält.

19. Metallverbundmembran nach Anspruch 18,
**dadurch gekennzeichnet,**
**daß** der Membranträger die eutektische Legierung AgCu enthält.

20. Metallverbundmembran nach Anspruch 19,
**dadurch gekennzeichnet,**
**daß** der Kupfergehalt der eutektischen Legierung zwischen 20 und 80 Gew.-%, bezogen auf das Gesamtgewicht der Legierung, liegt.

21. Metallverbundmembran nach Anspruch 20,
**dadurch gekennzeichnet,**
**daß** die Metallmembran PdAg23, PdCu40 oder eine PdY-Legierung enthält.

22. Metallverbundmembran nach Anspruch 15,
**dadurch gekennzeichnet,**
**daß** der poröse, metallische Membranträger eine Dicke von weniger als 100 und mehr als 20, vorzugsweise zwischen 50 und 20 µm, aufweist.

23. Metallverbundmembran enthaltend eine Metallmembran zwischen zwei metallischen Membranträgern mit poröser Struktur,
**dadurch gekennzeichnet,**
**daß** die Metallmembran eine Dicke von 1 bis 20 µm aufweist und die mittlere Porengröße des oder der Membranträger größer als 0,5 und kleiner als 10 µm ist.

24. Metallverbundmembran nach Anspruch 23,
**dadurch gekennzeichnet,**
**daß** die mittlere Porengröße der Membranträger größer ist als die Dicke der Metallmembran.

25. Metallverbundmembran nach Anspruch 23 oder 24,
**dadurch gekennzeichnet,**
**daß** die Metallmembran Palladium oder eine Palladiumlegierung und die porösen Membranträger eine zwei- oder mehrphasige Metallegierung enthalten.

26. Metallverbundmembran nach Anspruch 25,
**dadurch gekennzeichnet,**
**daß** die Membranträger eine eutektische Legierung enthalten.

27. Metallverbundmembran nach Anspruch 26,
**dadurch gekennzeichnet,**
**daß** die Membranträger die eutektische Legierung AgCu enthalten.

28. Metallverbundmembran nach Anspruch 27,
**dadurch gekennzeichnet,**
**daß** der Kupfergehalt der eutektischen Legierung zwischen 20 und 80 Gew.-%, bezogen auf das Gesamtgewicht der Legierung, liegt.

29. Metallverbundmembran nach Anspruch 28,
**dadurch gekennzeichnet,**
**daß** die Metallmembran PdAg23, PdCu40 oder eine PdY-Legierung enthält.

30. Metallverbundmembran nach Anspruch 23,
**dadurch gekennzeichnet,**
**daß** die porösen, metallischen Membranträger eine Dicke von weniger als 100 und mehr als 20, vorzugsweise zwischen 50 und 20 µm, aufweisen.

31. Verwendung der Metallverbundmembran nach einem der Ansprüche 15 bis 30 als Gastrennmembran.

32. Verwendung nach Anspruch 31 zur Abtrennung von Wasserstoff aus einem Gasgemisch.
